# FASCICULE DE BREVET EUROPEEN

(11) **EP 0 944 815 B1**
(45) Date de publication et mention de la délivrance du brevet: **25.09.2002**
(21) Numéro de dépôt: 97951284.5
(22) Date de dépôt: 09.12.1997
(51) Int. Cl.: G01F 23/292, G01F 23/284

(54) **APPAREIL DE CONTROLE DU NIVEAU D'UN FLUIDE DANS UN RESERVOIR**
KONTROLLVORRICHTUNG FÜR DEN FLÜSSIGKEITSSTAND IN EINEM BEHÄLTER
APPARATUS FOR CONTROLLING THE LEVEL OF A FLUID IN A TANK

(30) Priorité: 13.12.1996 FR 9615331
(43) Date de publication de la demande: 29.09.1999
(73) Titulaire: Benichou, Robert, 92400 Courbevoie (FR)
(72) Inventeur: Benichou, Robert, 92400 Courbevoie (FR)
(86) Numéro de dépôt international: FR9702244
(87) Numéro de publication internationale: WO98026258

(56) Documents cités:
- FR-A- 2 655 154
- US-A- 4 873 875
- US-A- 5 311 283
- PATENT ABSTRACTS OF JAPAN vol. 007, no. 164 (P-211), 19 juillet 1983 & JP 58 072126 A (MITSUBISHI DENKI KK), 30 avril 1983,
- DATABASE WPI Section EI, Week 8642 Derwent Publications Ltd., London, GB; Class S02, AN 86-278186 XP002060889 "Tanked dielectric liquid level measurer" -& SU 1 221 496 A (VINNITSA) , 30 mars 1986

## Description

La présente invention concerne un appareil de contrôle du niveau d'un fluide dans un réservoir.

L'appareil fournit une information lorsque le niveau de fluide franchit un seuil donné dans le réservoir. Dans une autre de ses versions, l'appareil de l'invention fournit plusieurs informations successives pour différents seuils et assure alors le contrôle, par paliers, de la quantité de fluide contenue dans le réservoir. Le fluide peut être un liquide ou un gaz; l'appareil selon l'invention concerne l'un comme l'autre cas, même si dans ce qui suit, pour fixer les idées, il pourra être question de liquide à titre d'exemple.

Dans bien des situations, on désire être averti lorsque le niveau de fluide contenu dans un réservoir descend au dessous d'une certaine limite; c'est le cas par exemple, des transports aériens comme les avions ou les hélicoptères, dont on cherche à réduire au maximum la charge de carburant pour une mission donnée.

De nombreuses solutions à ce problème ont été proposées dans le passé et nombreux sont les appareils de contrôle de niveau en usage à ce jour; de nature très diverses, mécanique, électro-mécanique, etc. Ils sont largement répandus dans des domaines variés. on ne s'étendra pas ici sur leur description.

L'invention utilise, à cette fin l'effet de polarisation rotatoire que peut exercer le fluide à contrôler quant à son niveau sur un rayonnement incident polarisé. Le rayonnement dont il s'agit est un rayonnement électromagnétique dans sa généralité. Une source fournit le rayonnement incident, lequel est soumis à l'action d'un premier polariseur puis à celle d'un second polariseur, ou analyseur, séparé du premier par un espace dans lequel est admis le fluide au cours des variations de son niveau dans le réservoir. Du fait de l'effet rotatoire en question, le rayonnement recueilli à la sortie du deuxième polariseur dépend de la quantité de fluide présente entre les polariseurs, dans cet espace, et informe notamment de la présence du fluide au niveau à contrôler, suivant des modalités diverses, toutes contenues dans l'invention, même si elles ne sont pas expressément décrites.

Il en est de même du signal correspondant que l'on peut élaborer à partir de ce rayonnement. Ce signal dépend entre autres de l'orientation des polariseurs.
L'invention sera mieux comprise en se reportant à la description qui suit et aux figures jointes qui représentent, toutes schématiquement, à titre non limitatif :
la figure 1 : une vue de l'appareil de l'invention,
la figure 2 : une vue d'une variante de l'appareil de l'invention,
la figure 3 : une vue d'une variante de réalisation d'une partie de l'appareil de l'invention.

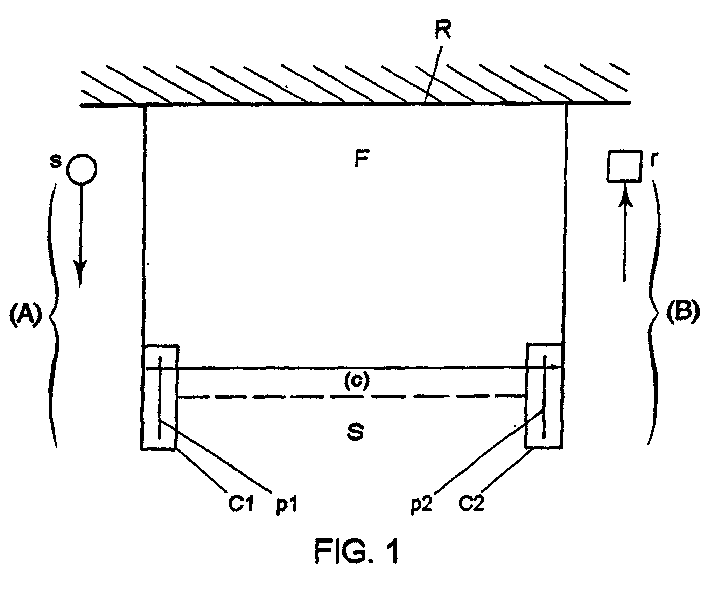

La figure 1 montre un bâti (hachures) par rapport auquel se déplace le niveau du fluide F lorsque la quantité de celui-ci dans le réservoir varie. Le bâti peut être le réservoir R lui-même, comme c'est le cas dans l'exemple de la figure; dans l'exemple de réalisation de cette figure on a représenté, en plus, deux pièces C₁ et C₂, fixes par rapport au bâti et l'on a admis que les polariseurs p₁ p₂ d'une paire sont incorporés, chacun à l'une de ces pièces, qui leur servent de support. Ces pièces se font vis à vis sur une ligne (c) choisie en rapport avec le niveau à contrôler. Un espace s, atteint par le fluide lorsque son niveau dans le réservoir varie, sépare les deux polariseurs. Ces pièces sont elles-mêmes parties intégrantes l'une C₁, d'une branche d'entrée (A) comprenant une source de rayonnement s, et des moyens d'engendrer un faisceau de rayons incidents dirigé vers le premier polariseur p₁ (flèche dirigée vers le bas) et l'autre, C₂, d'une branche de sortie (B) comprenant un récepteur r, et des moyens d'élaborer et de transmettre à celui-ci (flèche dirigée vers le haut) un signal à partir du rayonnement issu du second polariseur p₂. Ce rayonnement dépend, toutes choses égales par ailleurs, de la quantité de fluide rencontrée par le rayonnement incident sur son trajet (flèche horizontale), d'un polariseur à l'autre et dans l'espace S qui les sépare, et, au premier chef, de la présence ou de la non-présence du fluide dans cet espace. Le signal dont on dispose dans le récepteur r, informe donc l'observateur lorsque le fluide atteint cet espace et le niveau à contrôler. L'ensemble décrit assure ainsi le contrôle d'un niveau de fluide dans le réservoir.

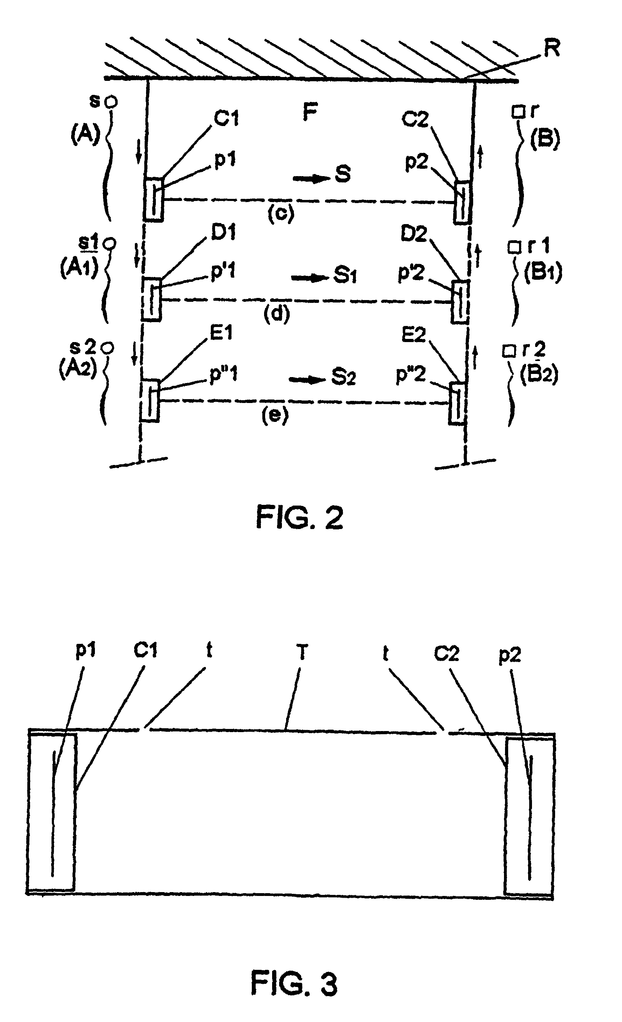

Dans une variante de l'invention, objet de la figure 2, est représenté le cas de plusieurs niveaux à contrôler. Dans cet exemple, non limitatif de l'invention, limité à trois ensemble, on a admis que les branches d'entrée, comme les branches de sortie sont toutes séparées les unes des autres, chacune, pour les premières, avec sa propre source de rayonnement et chacune, pour les secondes, avec son propre récepteur. On retrouve sur la figure les éléments correspondants aux différents ensembles avec leurs repères propres en p'₁ p'₂ ,D₁ D₂, (*d*), S₁ puis en p"₁ p"₂, E₁ E₂, (*e*), S₂ et en (*A*_{*1*})(*A*_{*2*}), (*B*_{*1*})(*B*_{*2*}), les sources portant les repères s, s₁ s₂ et les récepteurs les repères r r₁ r₂, outre certains des éléments déjà représentés sur la figure 1 avec leurs repères, à savoir p₁ p₂, C₁ C₂, (*c*) s et (*A*) et (*B*). Dans le cadre de l'invention, diverses autres dispositions sont possibles dans le cas de cette variante, avec, par exemple, une même source de rayonnement pour plusieurs branches d'entrée, ou un même récepteur pour plusieurs branches de sortie, ainsi que toute combinaison de ces dispositions. Toutes ces dispositions sont comprises dans l'invention.

Dans une variante de l'invention, représentée sur la figure 3, les pièces C₁ et C₂ occupent les extrémités d'un tube T, cylindrique, droit, métallique par exemple; ce tube est éventuellement fixé lui-même au réservoir; des moyens sont prévus pour ménager la communication entre l'extérieur et l'intérieur du tube, des trous t par exemple, percés dans sa paroi, pour permettre en particulier le passage d'un liquide.

Revenant sur la question de l'orientation des polariseurs d'une paire, orientation des polariseurs l'un par rapport à l'autre et par rapport au faisceau incident, il est précisé qu'elles sont choisies, en particulier, toutes choses étant égales par ailleurs, d'après l'intensité du rayonnement reçu par le deuxième polariseur de la paire lorsque ces orientations varient, quand le fluide est présent au niveau à contrôler notamment.

Une application courante de l'appareil de l'invention consiste dans la surveillance du niveau de carburant dans les véhicules de toutes sortes, transports aériens notamment.

## Revendications

1. Appareil de contrôle du niveau d'un fluide dans un réservoir -**caractérisé, en ce qu'**il comporte, au moins un ensemble comprenant une source de rayonnement électromagnétique s, une paire de polariseurs de ce rayonnement p₁ et p₂, séparés par un espace S atteint par le fluide lorsque le niveau à contrôler est atteint, le premier polariseur p₁, le dit espace S et le deuxième polariseur p₂ étant traversés successivement (flèche horizontale) par le dit rayonnement dirigé vers le premier polariseur p₁ (flèche dirigée vers le bas), et un récepteur r, auquel est transmis un signal correspondant au rayonnement issu du deuxième polariseur p₂.

2. Appareil suivant la revendication 1 **caractérisé en ce qu'**il comprend plusieurs dits ensembles.

3. Appareil suivant la revendication 1 **caractérisé en ce que** les dits polariseurs sont incorporés à des pièces C₁ C₂ occupant les extrémités d'un tube T.

## Claims

1. Device for controlling the level of a fluid in a tank, **characterized in that** it has at least one assembly comprising an electromagnetic radiation source s, a pair of polarizers p1 and p2, which polarize this radiation, and are separated by a space S, which the fluid reaches when the level to be controlled is reached, said radiation, directed toward said first polarizer p1 (downward arrow), passing successively through the first polarizer p1 said space S, and the second polarizer p2 (horizontal arrow), and a receiver r, to which a signal corresponding to the radiation emerging from the second polarizer p2 is transmitted.

2. Device according to claim 1, **characterized in that** it comprises a plurality of said assemblies.

3. Device according to claim 1, **characterized in that** said polarizers are incorporated in parts C1 C2 occupying the ends of a tube T.

## Patentansprüche

1. Vorrichtung zur Kontrolle des Pegels eines Fluids in einem vorratsbehälter, **dadurch gekennzeichnet, dass** sie zumindest eine Einheit umfasst mit einer Quelle für elektromagnetische Strahlung s, einem Paar von Polarisatoren dieser Strahlung p₁ und p₂, die durch einen Zwischenraum S getrennt sind, der von dem Fluid eingenommenen wird, wenn der zu kontrollierende Pegel erreicht ist, wobei der erste Polarisator p₁, der Zwischenraum S und der zweite Polarisator p₂ nacheinander (horizontaler Pfeil) von der auf den ersten Polarisator P1 gerichteten Strahlung (nach unten gerichteter Pfeil) durchlaufen werden, und einem Empfänger r, zu dem ein Signal übertragen wird, das der von dem zweiten Polarisator p₂ kommenden Strahlung entspricht.

2. Vorrichtung nach Anspruch 1, **dadurch gekennzeichnet, dass** sie mehrere Einheiten umfasst.

3. Vorrichtung nach Anspruch 1, **dadurch gekennzeichnet, dass** die Polarisatoren in Teilen C₁ C eingebaut sind, die die Enden einer Röhre T einnehmen.
